# EUROPEAN PATENT APPLICATION

(11) **EP 3 799 992 A1**
(43) Date of publication of application: **07.04.2021**
(21) Application number: 20199864.8
(22) Date of filing: 02.10.2020
(51) Int. Cl.: B23K 9/10, B23K 9/16, B23K 9/095

(54) **SHIELDING GAS CUSTOMIZED WELDING APPARATUS AND METHOD**

(30) Priority: 02.10.2019 US 201916590765
(71) Applicant: Lincoln Global, Inc., Santa Fe Springs, CA 90670 (US)
(72) Inventor: Cross, Charles, Euclid, OH 44132 (US); Relko, Michael D., Euclid, OH 44132 (US); Henry, Judah Benjamin, Painesville, OH 44077 (US)
(74) Representative: Grosse Schumacher Knauer von Hirschhausen

(57) **Abstract**

A welding or additive manufacturing power supply includes a user interface that receives a user input shielding gas mixture comprising separately adjustable amounts of a first and a second shielding gas. Output circuitry generates a shielding gas customized welding waveform. A memory stores a first plurality of waveform parameters that are associated with the first shielding gas, and a second plurality of waveform parameters that are associated with the second shielding gas. A controller is operatively connected to control operations of the output circuitry, and is configured to determine a third plurality of waveform parameters at least partially defining the shielding gas customized welding waveform. The controller determines the third plurality of waveform parameters from the first and second plurality of waveform parameters and the amounts of the first and second shielding gas.

## Description

### BACKGROUND OF THE INVENTION

### Field of the Invention

The present invention relates to a welding or additive manufacturing power supply according to the preamble of claim 1, and more generally to a gas metal arc welding (GMAW) and related metal deposition processes that utilize a shielding gas, such as gas tungsten arc welding (GTAW), metal additive manufacturing, hardfacing, and the like.

### Description of Related Art

Gas metal arc welding (GMAW) is an arc welding process which produces the coalescence of metals by heating them with an electrical arc located between a continuously fed filler metal electrode and a workpiece. The GMAW process uses shielding from an externally supplied gas to protect the molten weld pool. The GMAW process lends itself to weld with a wide range of both solid carbon steel and tubular metal-cored electrodes. The alloy material range for GMAW includes: carbon steel, stainless steel, aluminum, magnesium, copper, nickel, silicon bronze and tubular metal-cored surfacing alloys. The GMAW process lends itself to semiautomatic, robotic automation and hard automation welding applications.

The shielding gas used to protect the molten weld pool in GMAW welding can be an inert gas, such as argon (Ar) or helium (He), or a reactive gas such as carbon dioxide (CO₂) or oxygen (O₂). Blends of shielding gasses can be used during GMAW welding to achieve desired weld characteristics, such as puddle fluidity and penetration. Binary (two-part) shielding gas blends are the most common gas blends and they are typically made up of either argon + helium, argon + CO₂, or argon + oxygen. Ternary (three-part) gas blends can also be used, such as an argon + helium + CO₂.

Changes to the shielding gas composition can affect arc characteristics, such as arc stability, during GMAW welding. For example, switching from a 90% Ar + 10% CO₂ gas mixture to an 80% Ar + 20% CO₂ gas mixture without adjusting any welding parameters (e.g., welding voltage, pulse current level, etc.) at the welding power supply will result in a welding arc having different characteristics, and can lead to arc instability and increased spatter, which is undesirable. Welders, in particular novice welders, may not know what parameters to adjust to compensate for changes in shielding gas composition. Welders may also elect to use a compromise set of welding parameters that are not optimized for any particular gas mixture. Thus, an intuitive, user-friendly method of adjusting welding parameters according to changes in shielding gas mixture would be beneficial.

### BRIEF SUMMARY OF THE INVENTION

The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

The invention provides a welding or additive manufacturing power supply, comprising: a user interface configured to receive a user input shielding gas mixture comprising an amount or proportion of a first shielding gas and an amount or proportion of a second shielding gas, wherein the amount or proportion of the first shielding gas and the amount or proportion of the second shielding gas are separately adjustable; output circuitry configured to generate a shielding gas customized welding waveform; a memory storing: a first waveform parameter that is associated with the first shielding gas and a second waveform parameter that is associated with the second shielding gas; and a controller, operatively connected to control operations of the output circuitry, and configured to determine a third waveform parameter at least partially defining the shielding gas customized welding waveform. Specific aspects of the invention are as follows.

In accordance with one aspect of the present invention, provided is a welding or additive manufacturing power supply. The power supply includes a user interface configured to receive a user input shielding gas mixture comprising a proportion of a first shielding gas of the shielding gas mixture, a proportion of a second shielding gas of the shielding gas mixture, and a proportion of a third shielding gas of the shielding gas mixture. The proportion of the first shielding gas, the proportion of the second shielding gas, and the proportion of the third shielding gas are separately adjustable. The power supply includes output circuitry configured to generate a shielding gas customized welding waveform. A memory stores a first welding voltage level that is associated with the first shielding gas, a second welding voltage level that is associated with the second shielding gas, and a third welding voltage level that is associated with the third shielding gas. A controller is operatively connected to control operations of the output circuitry. The controller is configured to determine an average welding voltage level for the shielding gas customized welding waveform. The controller calculates the average welding voltage level for the shielding gas customized welding waveform as a weighted average that includes the first welding voltage level at the proportion of the first shielding gas, the second welding voltage level at the proportion of the second shielding gas, and the third welding voltage level at the proportion of the third shielding gas.

In accordance with one aspect of the present invention, provided is a welding or additive manufacturing power supply. The power supply includes a user interface configured to receive a user input shielding gas mixture comprising a proportion of a first shielding gas of the shielding gas mixture and a proportion of a second shielding gas of the shielding gas mixture. The proportion of the first shielding gas and the proportion of the second shielding gas are separately adjustable. The power supply includes output circuitry configured to generate a shielding gas customized welding waveform. A memory stores a first average welding voltage level that is associated with the first shielding gas and a second average welding voltage level that is associated with the second shielding gas. A controller is operatively connected to control operations of the output circuitry. The controller is configured to determine a third average welding voltage level for the shielding gas customized welding waveform. The controller calculates the third average welding voltage level for the shielding gas customized welding waveform using the proportion of the first shielding gas, the first average welding voltage level, the proportion of the second shielding gas, and the second average welding voltage level.

In accordance with another aspect of the present invention, provided is a welding or additive manufacturing power supply. The power supply includes a user interface configured to receive a user input shielding gas mixture comprising an amount of a first shielding gas and an amount of a second shielding gas. The amount of the first shielding gas and the amount of the second shielding gas are separately adjustable. The power supply includes output circuitry configured to generate a shielding gas customized welding waveform. A memory stores a first plurality of waveform parameters that ae associated with the first shielding gas, and a second plurality of waveform parameters that are associated with the second shielding gas. A controller is operatively connected to control operations of the output circuitry. The controller is configured to determine a third plurality of waveform parameters at least partially defining the shielding gas customized welding waveform. The controller determines the third plurality of waveform parameters from the first plurality of waveform parameters, the amount of the first shielding gas, the second plurality of waveform parameters, and the amount of the second shielding gas.

Further embodiments are given in the following description, drawings and claims.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 shows an example welding system;
FIG. 2 shows a schematic diagram of an example welding system;
FIG. 3a shows an example user interface;
FIG. 3b shows an example user interface;
FIG. 3c shows an example user interface;
FIG. 4 shows an example pulse welding current waveform;
FIG. 5 shows example pulse welding voltage waveforms;
FIG. 6 shows an example pulse welding current waveform;
FIG. 7 is a flow diagram; and
FIG. 8 shows an example controller.

### DETAILED DESCRIPTION OF THE INVENTION

The present invention concerns arc welding (e.g., GMAW welding, GTAW welding, etc.) and related metal deposition processes that utilize a shielding gas, such as additive manufacturing, hardfacing, etc. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention are employed for the purpose of promoting an understanding of the invention and should not be taken as limiting.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

Embodiments of the present invention are given in the ensuing description, drawings and claims and will be discussed in the context of a manual or semiautomatic GMAW welding system. However, embodiments of the present invention can be used in fully automatic GMAW systems, such as robotic welding systems. Moreover, embodiments of the present invention can be used in other metal deposition operations, such as GTAW welding operation, additive manufacturing operations, hardfacing operations, and the like. Because robotic welding, GTAW, additive manufacturing and hardfacing processes and systems are known, the details of such processes and systems need not be described herein.

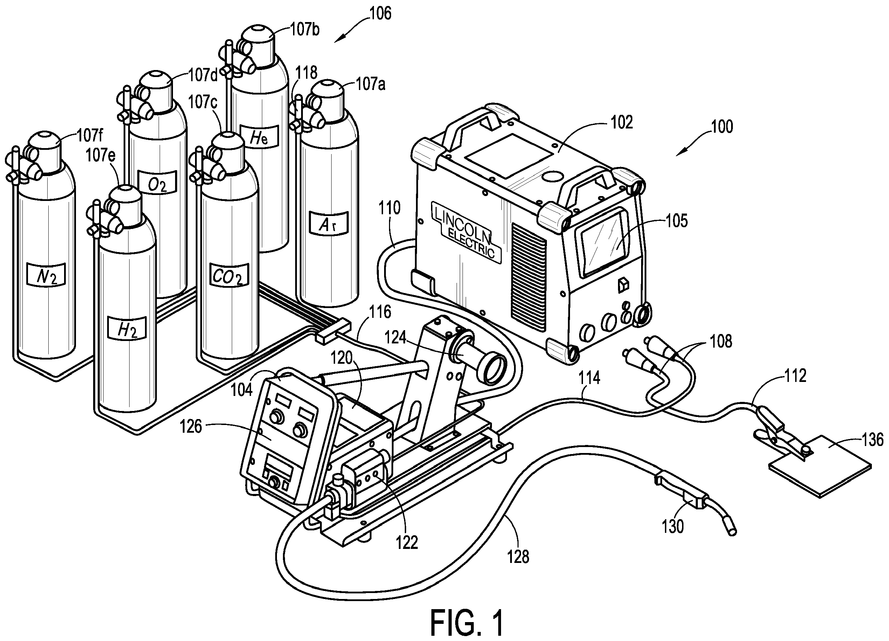

Referring now to the drawings, Fig. 1 shows an example GMAW welding system 100. The welding system 100 includes welding power supply 102, wire feeder 104, and gas supply 106. Welding power supply 102 includes power cables 108, control cable 110, and power supply cable (not shown). Power cables 108 include a ground wire and clamp 112 connected to a workpiece 136, and power cable 114 configured to connect to wire feeder 104. Control cable 110 may be configured to connect to the wire feeder 104. In another embodiment (not shown), control cable 110 may be configured to be wireless. It is understood that welding power supply 102, power cables 108, and control cable 110 can have any configuration suitable for supplying power and welding controls for the welding system 100. The power supply 102 further includes a user interface 105 through which a user can view and adjust various settings and parameters of the welding process (e.g., waveform parameters, shielding gas mixture, etc.) The user interface 105 can be located on the power supply 102 as shown, or be located remote from the power supply. In certain embodiments, the user interface 105 can be located on a remote processing device that communicates with the power supply 102, such as on a networked computer, a smart phone, a control pendant, or the like.

The gas supply 106 includes one or more shielding gas sources 107a-107f. Six different example shielding gas cylinders (Ar, He, CO₂, O₂, H₂, N₂) are shown in Fig. 1 to provide both inert and active shielding gasses. However, it is to be appreciated that fewer or greater than six shielding gas sources can be used in embodiments of the present invention. The different shielding gas sources 107a-107f can allow a user to adjust and customize the shielding gas mixture to be used during welding by adjusting the proportion of the different gasses in the mixture. The gas mixture can be adjusted manually or automatically via appropriate valves and regulators 118 associated with the cylinders. The gas sources 107a-107f can supply the shielding gas mixture to a common pipe 116, which can be connected to the wire feeder 104. As used herein, "shielding gas mixture" can refer to a blend of two or more different shielding gasses, or to single shielding gas that provides 100% of the contribution to the shielding gas mixture (e.g., 100% Ar, 100% CO₂, etc.).

As shown in FIG. 1, the wire feeder 104 may include housing 120, gear box 122, wire spool assembly 124, and user interface 126. Extending from gear box 122 is a hose 128 that is configured to connect to a welding torch or gun 130. Housing 120 may be connected to the user interface 126 and gear box 122. Further, control cable 110 and power cable 114 extending from welding power supply 102, and pipe 116 extending from the gas supply 106, are configured to connect to wire feeder 104. Gear box 122 includes at least a plurality of rollers (not shown) that advance and retract the welding wire (not shown) and a wire guide (not shown) for the welding wire. It is understood that wire feeder 104 may have any configuration suitable for receiving the shielding gas mixture, welding power from the power supply 102, and welding controls.

Extending between gear box 122 and welding gun 130 is hose 128 that may contain the welding wire and wire conduit, a gas line, and a welding gun trigger switch connection. The hose 128 may include a control cable configured to connect the welding gun 130 to at least one of the following: the welding power supply 102, the wire feeder 104, and gas supply 106. Hose 128 can be any diameter and length configured to contain the welding wire, the gas line, and the switch connection. Hose 128 is made of any material suitable for welding environments. It is understood that hose 128 and welding gun 130 may have any configuration suitable for supplying welding wire, the shielding gas mixture, and controls through the hose and to the welding gun.

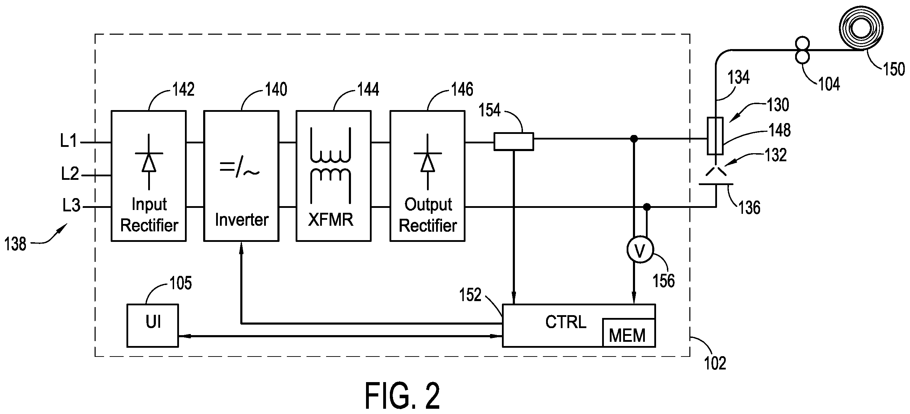

Figure 2 shows a schematic diagram of an example GMAW welding power supply 102. The power supply 102 is configured to generate welding waveforms for various modes of metal transfer, such as short-circuit transfer (GMAW-S), surface tension transfer (STT), axial spray transfer, and pulsed spray transfer. Pulsed spray metal transfer (GMAW-P) is a highly controlled variant of axial spray transfer, in which the welding current is cycled between a high peak current level and a low background current level. Metal transfer occurs during the high energy peak level in the form of a single molten droplet. In certain embodiments, the pulsed spray transfer mode can be a free-flight transfer a process in which the droplet of molten metal regularly makes contact to the workpiece while a thin tether of molten metal connects the droplet to the tip of the electrode (e.g., RAPID X by LINCOLN ELECTRIC).

The welding power supply 102 generates an electric arc 132 between a welding electrode 134 and a workpiece 136 to perform an arc welding operation. The welding power supply 102 receives electrical energy for generating the arc 132 from a power source 138, such as a commercial power source or a generator. The power source 138 can be a single phase or three phase power source. In certain embodiments, the arc welding system can be a hybrid system that includes one or more batteries (not shown) that also supply energy to the welding power supply 102. The welding power supply 102 includes a switching type power converter such as an inverter 140 for generating the arc 132 according to a desired welding waveform. Alternatively or additionally, the welding power supply 102 could include a DC chopper (not shown) or boost converter (not shown) for generating welding waveforms. AC power from the power source 138 is rectified by an input rectifier 142. The DC output from the rectifier 142 is supplied to the inverter 140. The inverter 140 supplies high-frequency AC power to a transformer 144, and the output of the transformer is converted back to DC by an output rectifier 146. The output rectifier 146 supplies welding current to a welding gun or torch 130 that is operatively connected to the power supply 102 (e.g., via a wire feeder). The torch 130 can have a contact tip 148 for transferring the electrical energy supplied by the power supply 102 to the electrode 134.

The electrode 134 is a consumable wire welding electrode. The electrode 134 can be fed from a spool 150 by a wire feeder 104 configured to advance the electrode toward a weld puddle during the welding operation. As shown schematically in FIG. 2, the feeder 104 can include motor-operated pinch rollers for driving the electrode 134 toward the torch 130.

The arc welding system can be configured for direct current electrode positive (DC+) or "reverse" polarity wherein the contact tip 148 and electrode 134 are connected to a positive lead from the power supply 102, and the workpiece 136 is connected to a negative lead. Alternatively, the arc welding system can be configured for direct current electrode negative (DC-) or "straight" polarity, wherein the workpiece 136 is connected to the positive lead and the contact tip 148 and electrode 134 are connected to the negative lead. Further, the arc welding system can be configured for AC welding in which AC waveforms are provided to the contact tip 148, electrode 134 and workpiece 136.

The power supply 102 includes a controller 152 operatively connected to the inverter 140 for controlling the welding waveforms generated by the power supply. The controller 152 can provide a waveform control signal to the inverter 140 to control its output. The controller 152 controls the output of the inverter 140 via the waveform control signal, to achieve a desired welding waveform, welding voltage, welding current, etc. The waveform control signal can comprise a plurality of separate control signals for controlling the operation of various switches (e.g., transistor switches) within the inverter 140. As will be discussed further below, the controller 152 can adjust various welding parameters such as welding voltage, current level, current pulse widths and peaks, etc. based on a user input shielding gas mixture, so that the user does not have to manually adjust the welding parameters as the shielding gas mixture changes. The shielding gas mixture is input by a user via a user interface 105 of the welding power supply 102, and the controller 152 automatically adjusts welding parameters based on the shielding gas mixture. The controller 152 and the user interface 105 communicate bidirectionally to provide both user inputs and outputs at the user interface. The controller 152 monitors aspects of the welding process via feedback signals. For example, a current sensor, such as a current transformer (CT) or shunt 154, can provide a welding current feedback signal to the controller 152, and a voltage sensor 156 can provide a welding voltage feedback signal to the controller.

The controller 152 can be an electronic controller and may include a processor. The controller 152 can include one or more of a microprocessor, a microcontroller, a digital signal processor (DSP), an application specific integrated circuit (ASIC), a field-programmable gate array (FPGA), discrete logic circuitry, or the like. The controller 152 can include a memory portion (e.g., RAM or ROM) storing program instructions that cause the controller to provide the functionality ascribed to it herein. The controller 152 can include a plurality of physically separate circuits or electronic devices, such as a processor in combination with separate comparators, logic circuits, etc. However, for ease of explanation, the controller 152 is shown as a monolithic device.

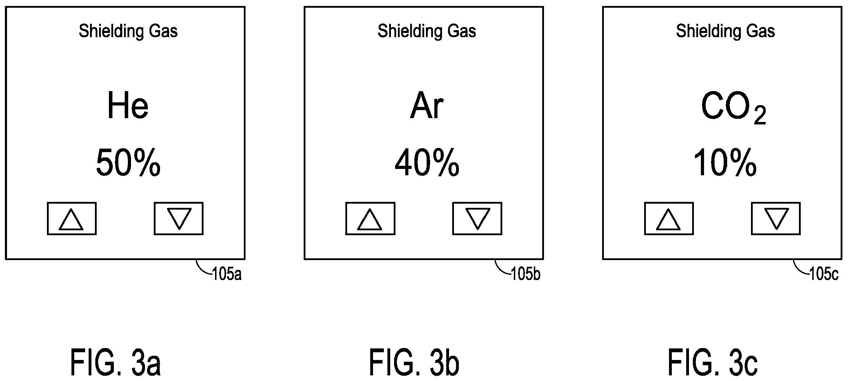

Figures 3a-3c show example user interfaces 105a-105c for entering a desired shielding gas mixture into the welding power supply. The shielding gas mixture to be used during welding can be set via the valves and regulators on the gas supply. Once set, the desired mixture is entered into the welding power supply so that the power supply can adjust the welding parameters according to the gas mixture. Some conventional welding power supplies have a few predefined shielding gas mixtures associated with predefined sets of welding parameters. However, the user is limited to these few predefined shielding gas mixtures as there is no provision for custom gas mixtures. With such conventional welding power supplies, if a custom gas mixture is to be supplied, then the user must manually adjust the welding parameters to obtain desired arc characteristics. For example, the user may have to manually adjust a trim setting (e.g., average welding voltage) on the welding power supply to increase or reduce the arc length, or adjust the current pulse level or frequency, etc., to add or remove energy from the arc. Such manual adjustments can be complicated and time-consuming, and may be ignored by a user, which can result in suboptimal welds. Rather than only allowing predefined shielding gas mixtures and associated sets of welding parameters, the power supply of the present invention permits a user to input separately adjustable amounts of the different shielding gasses that make up the shielding gas mixture. The power supply, e.g., the controller, will calculate welding parameters that are specifically tailored to the entered shielding gas mixture, based on the separately adjustable amounts of each constituent shielding gas. The input shielding gas amounts can be in the form of a proportion or ratio, such as a percentage of the total shielding gas mixture as shown in Figs. 3a-3c. The user interfaces 105a-105c can include buttons, knobs, and the like to allow a user to individually adjust the amount of each shielding gas. Interface screens are shown for three different shielding gasses (He, Ar, CO₂), however, the user interface could provide for any number of shielding gasses, such as screens for some or all of the six different shielding gasses shown in Fig. 1 (Ar, He, CO₂, O₂, H₂, N₂), or even for additional gasses or gas mixtures. The power supply can allow the user to move between the different screens associated with the respective available shielding gasses in order to separately adjust the amount of each gas.

It is to be appreciated that the power supply can accommodate much variation in the shielding gas mixture. The user interface can be configured to allow adjustment of the different shielding gas proportions from 0% to 100%, such as in 1% increments or in other increments. The respective shielding gas proportions could also be entered directly via a keypad. When the proportion of each shielding gas in the gas mixture has been entered, the total should equal 100%. If the total does not equal 100%, an appropriate alert or alarm indication can be displayed on the user interface. In certain embodiment, the default amount of each shielding gas is 0%, and the amount must be adjusted upward by the user. Once set, custom gas mixtures can be stored in the memory of the power supply for subsequent use.

The composition of the shielding gas mixture can significantly impact the GMAW welding process. The composition of the shielding gas mixture can affect the characteristics of the arc, droplet formation, detachment and transfer, weld pool dynamics and weld bead profile. Some shielding gasses dissociate and recombine in the arc plasma (e.g., CO₂), whereas others do not (e.g., Ar). The dissociation can impact arc width and droplet temperature. As CO₂ is added to the gas mixture, the arc width can increase and the droplets can become cooler, requiring more energy to achieve desired arc and weld properties. Thermal conductivity varies among shielding gasses and can impact the shape of the arc. For example, argon has a low thermal conductivity and produces a narrow penetration profile into the workpiece; whereas helium results in a broader penetration pattern. Three basic criteria that are useful in understanding the properties of shielding gas are: (a) ionization potential of the gas components; (b) thermal conductivity of the shielding gas components; and (c) the chemical reactivity of the shielding gas with the molten weld puddle. Ionization potential can be described as the voltage needed to remove an electron from an atom of the shielding gas, turning the atom into an ion, or as a measurement of electrical conductivity of the shielding gas. Arc initiation and stability are affected by the ionization potential of the shielding gas. For example, arc initiation is easier with an argon shielding gas versus helium, due to argon's lower ionization potential. In general, a higher ionization potential within the shielding gas mixture results in higher average welding voltage and a hotter arc. A table of example shielding gas components and their ionization potentials is provided below.

| | Ar | He | CO₂ | O₂ | H₂ | N₂ |
|---|---|---|---|---|---|---|
| Ionization Potential (eV) | 15.7 | 24.5 | 14.4 | 13.2 | 13.5 | 14.5 |

The average welding voltage needed to produce acceptable arc characteristics, and the corresponding arc length during welding, are directly impacted by the shielding gas mixture used during welding. This is primarily due to the ionization potential of the different shielding gasses in the mixture. As noted above, some conventional welding power supplies have a few predefined shielding gas mixtures associated with predefined sets of welding parameters. However, the user is limited to those few predefined shielding gas mixtures as there is no provision for custom gas mixtures. If a custom gas mixture is used that does not match the predefined shielding gas mixtures that are programmed into the power supply, arc instability and spattering can result. For example, if helium with its high ionization potential is added to the gas mixture, a higher arc voltage will be required. However, the power supply may try to regulate the welding process to a lower welding voltage associated with a different gas mixture, resulting in arc instability. In such a situation, the user would have to manually adjust certain parameters, such as a trim setting (e.g., increase the trim to increase the average voltage and arc length) to account for the increased ionization energy of the shielding gas. (Note: modern synergic GMAW power supplies allow a user to set a wire feed speed WFS of the electrode. The power supply selects pulse welding voltage and current waveforms and an average welding voltage based on the WFS setting. The user can adjust the average voltage/arc length within a limited range, e.g., ±50%, by adjusting the "trim").

It is desirable to have consistent arc characteristics when switching from one shielding gas mixture to another. The power supply of the present invention utilizes base welding parameters and adjusts them according to the amounts or proportions of the different constituent shielding gasses (e.g., Ar, He, CO₂, O₂, H₂, N₂) to be used during welding, and which are input into the power supply by the user. This is different than having a few preprogrammed shielding gas mixtures, and their associated sets of welding parameters, available for selection by the user. By utilizing base welding parameters and adjusting them according to the amounts or proportions of the different base shielding gasses, the user can create and use custom gas mixtures with an expectation of consistent arc characteristics from the power supply and minimal manual adjustments. The base welding parameters can be determined empirically and can be preprogrammed into the power supply. In certain embodiments, the base welding parameters can be changed and overwritten in the field.

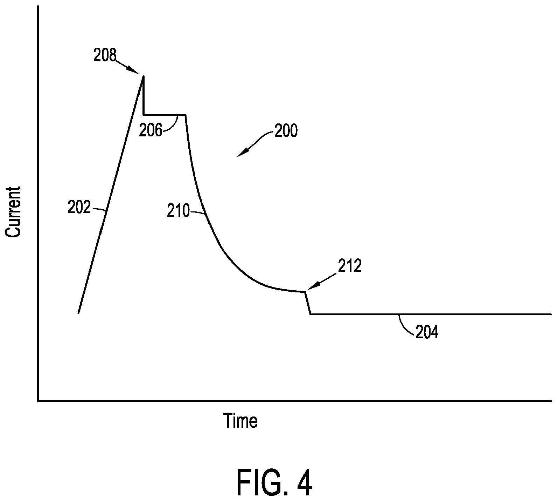

Figure 4 shows an example pulse welding current waveform 200 and illustrates some example waveform parameters that can be calculated, determined and adjusted by the controller in the power supply from the proportions of the different constituent shielding gasses in the shielding gas mixture. A front flank ramp-up rate 202 can be adjusted according to the amounts of the constituent shielding gasses. The ramp-up rate 202 determines how rapidly the current will increase from the background current 204 to the peak current 206. The ramp-up rate 202 assists in the formation of the molten droplet at the end of the electrode. The overshoot 208 can also be adjusted according to the amounts of the constituent shielding gasses. Increasing overshoot is associated with a more rigid arc that is less prone to deflection. Overshoot 208 adds to the pinch current and it increases the electromagnetic pinch force applied to the molten droplet. The peak current 206 level and duration can be adjusted according to the amounts of the constituent shielding gasses. The peak current 206 is the nominal current for the high energy pulse. It is adjusted to a level that is set consistently above the globular to spray transition current. During the time when the peak current 206 is delivered, the molten droplet detaches from the electrode. An increase in peak current 206 increases the average welding current and the weld penetration. Peak duration or peak time affects droplet size (e.g., as the peak time increases, droplet size decreases, and vice versa). A tail-out 210 time and speed/rate can also be adjusted according to the amounts of the constituent shielding gasses. Tail-out 210 is associated with current decay from the peak 206 to the background current 204. It generally follows an exponential path to the background current 204. An increase in tail-out time increases the average current and marginally increases penetration. Tail-out time is increased to provide an increase in droplet fluidity. This results in improved toe wetting, a softer arc sound, and increased puddle fluidity. Tail-out speed defines the rate at which the waveform moves from the peak current 206 to either the step-off current 212 or the background current 204. Adjustment of the tail-out speed increases or decreases the exponential fall to the background current 204. The step-off current 212 can also be adjusted according to the amounts of the constituent shielding gasses. The step-off current 212 defines the current level at the portion of the waveform where tail-out 210 ends. The step-off current 212 can add to, or take away from, the area under the waveform 200. The background current 204 level can also be adjusted according to the amounts of the constituent shielding gasses. The background current 204 is the lower nominal current of the waveform 200 and is used to develop the molten droplet on the end of the electrode. The frequency of the current pulse (pulse frequency) can also be adjusted according to the amounts of the constituent shielding gasses. Pulse frequency determines for how often the pulse cycle occurs in one second. As the frequency increases, the arc narrows, the average current increases, and the molten droplets become smaller. As the frequency decreases, the weld bead and the arc become wider.

Figure 4 shows an example pulse welding current waveform 200; however it is to be appreciated that the voltage waveform can have a similar shape and alternate between a background level and a peak level. The welding voltage can also be adjusted according to the amounts of the constituent shielding gasses in the shielding gas mixture. In particular, the controller in the power supply can be configured to determine an average welding voltage level that is tailored to the particular gas mixture to be used. By tailoring the average welding voltage level, among other example welding parameters discussed herein, to the particular shielding gas mixture to be used, the output circuitry in the power supply can be controlled to generate a shielding gas customized welding waveform. Using a limited number of base parameters or waveforms, the power supply can generate arcs that behave consistently across a spectrum of possible shielding gas mixtures. The controller in the power supply can scale or interpolate the base parameters or waveforms according to the amounts or proportions of the different constituent shielding gasses, to determine parameters for the shielding gas customized welding waveform. For example when adding constituent gasses that tend to increase ionization potential or increase cooling of the droplet, the controller can calculate new parameters based on the new constituent gas proportions to automatically increase average welding voltage, or otherwise add more energy to the arc (e.g., via increased pulse peak current, pulse duration, pulse frequency, etc.).

Base welding parameters that are used to calculate parameters for a shielding gas customized welding waveform can be stored in the power supply's memory. In certain embodiments, the power supply can include a separate base set of parameters for each expected constituent shielding gas. For example, the power supply could include a separate base set of parameter for some or all of Ar, He, CO₂, O₂, H₂, and N₂. The power supply could include sets of parameters for additional gasses and common shielding gas mixtures. An example base set of parameters can include some or all of the average welding voltage, average welding current, current front flank ramp-up rate, downslopes, overshoot, pulse peak current, pulse duration, pulse frequency, tail-out time and speed, background current level, step-off current level, and other welding parameters. Using the base parameters, the controller can calculate parameters for a shielding gas customized welding waveform according the proportions of the constituent shielding gasses forming the shielding gas mixture. This can be done by interpolation or averaging for example. In particular, the controller can calculate a weighted average from the base parameters corresponding to the different constituent gasses at the proportions of the constituent gasses. An example of such a calculation is provided below using average welding voltage as the parameter to be adjusted for a shielding gas customized welding waveform, with a shielding gas mixture of two hypothetical generic constituent gasses: Gas1 and Gas2.

Gas1 has a stored average welding voltage of 20V and Gas2 has a stored average welding voltage of 24V. The average welding voltage is the average voltage level over the period of the pulse waveform. A user-input shielding gas mixture of 100% Gas1 would cause the power supply to output an average welding voltage of 20V. Similarly, a user-input shielding gas mixture of 100% Gas2 would cause the power supply to output an average welding voltage of 24V. However, the user can enter a customized shielding gas mixture into the power supply, such as 12% Gas1 and 88% Gas2. In such a scenario, the controller in the power supply can calculate a weighted average of the two different average voltage levels, according to their individual proportions. The controller would calculate the weighted average of the two different average welding voltages as: (0.12)x20V+(0.88)x24V=23.5V. At a 12% Gas1+88% Gas2 shielding gas mixture setting, the power supply would control the welding waveform to achieve an average welding voltage of 23.5V. If the shielding gas mixture was adjusted to 50% Gas1+50% Gas2, the power supply would automatically adjust the average welding voltage to 22V, based on the new weighted average. Other welding parameters or set points can be similarly weighted to generate the shielding gas customized or modified welding waveform. As additional shielding gasses are added to the mix, their base parameters can also be weighted, so that any number of different constituent shielding gasses equaling 100% of the shielding gas mixture can be combined and used to automatically optimize the waveform for the shielding gas mixture. In certain embodiments, the power supply can store parameters that define a single base current and/or voltage waveform, and can store additional scaling parameters that are associated with respective constituent shielding gasses. The scaling parameters can be weighted based on the amounts or proportions of the constituent shielding gasses, to calculate shielding gas customized scaling parameters. These shielding gas customized scaling parameters can then be applied to the parameters defining the single base current and/or voltage waveform, to provide welding parameters for the shielding gas customized welding waveform. Further, the welding power supply can store different base parameters sets for different welding set ups (e.g., different wire types, sizes, welding processes, etc.) The different base parameter sets would be associated with respective constituent shielding gasses, but would be selected based on the current welding set up.

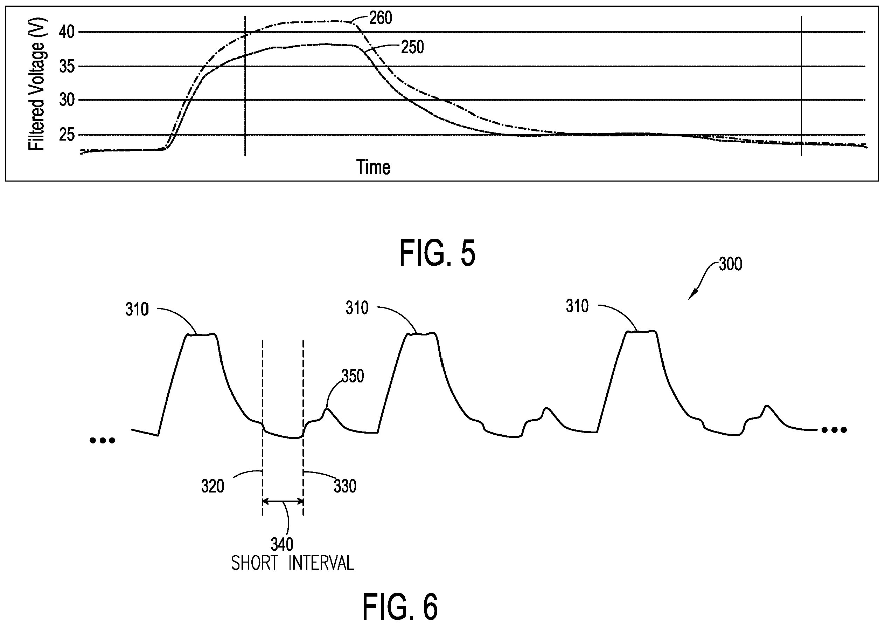

Figure 5 shows example pulse welding voltage waveforms and illustrates how the power supply can adjust the welding voltage according to the shielding gas mixture. Both traces 250, 260 were captured under similar conditions, e.g., the same weld mode, contact-tip-to-work distance, travel speed and WFS. However, the lower trace 250 is of a welding process that utilized a 90%Ar+10%CO₂ gas mixture, whereas the upper trace 260 concerns an 80%Ar+20%CO₂ gas mixture. Both arc traces have similar shapes. But the lower trace 250 has a slightly lower peak and average welding voltage than the upper trace 260 (having additional CO₂), due to an adjustment made by the power supply based on the differences in the shielding gas mixture. Although the ionization potential of CO₂ at 14.4 eV is lower than Ar at 15.7 eV, the welding voltage level for CO₂ that is stored in the power supply (for use in calculating the shielding gas customized average welding voltage level) is slightly higher than the Ar voltage level. This is due to various effects that CO₂ has on the welding arc necessitating the addition of further energy to the arc, such as widening the arc and cooling the droplet. Such effects may be due to the reactive nature of CO₂ and the fact that it dissociates in the arc plasma. Conversely, if the proportion of Ar in a He+Ar shielding gas mixture was increased, the average welding voltage would be expected to decrease due to the lower ionization potential of Ar at 15.7 eV as compared to He at 24.5 eV. Similarly, with an Ar+O₂ shielding gas mixture, if the proportion of O₂ was increased, the average welding voltage would be expected to decrease, due at least in part to the lower ionization potential of O₂ at 13.2 eV.

Figure 6 shows a further example pulse welding current waveform 300 that can be controlled in the manner discussed herein. The waveform 300 in Fig. 6 is for a free-flight transfer a process in which the droplet of molten metal regularly makes contact to the workpiece while a thin tether of molten metal connects the droplet to the tip of the electrode. As can be seen from the waveform 300 of Fig. 6, after a peak pulse 310 is fired, a short may occur starting at time 320, for example, that lasts until time 330, for example, when the short is cleared. The times 320 and 330 define a short interval 340. As can be seen in Fig. 6, peak pulses 310 are fired at regular intervals during the multiple pulse periods or cycles of the welding process. During any given cycle, a short condition may or may not occur. However, when the distance between the tip of the electrode and the workpiece is relatively small, a short can occur on almost every cycle. During the short interval 340, the current level is reduced to minimize spatter created by the tethered connection blowing apart. The current tends to reduce until the short is cleared and, at such reduced current levels, when the short breaks or clears, the molten metal tends to pinch off in an unexplosive manner, eliminating or at least reducing the amount of spatter created. The waveform 300 of Fig. 6 also includes a plasma boost pulse 350, which is used to help prevent another short from occurring immediately after the short that was just cleared. In addition to the parameters discussed above, parameters that can be adjusted according to the shielding gas mixture include the level of the plasma boost pulse 350 and its duration, and the low current level during the short interval 340.

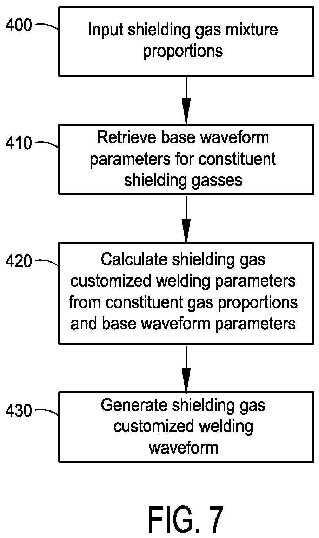

Figure 7 is a flow diagram of an example process for entering and utilizing a customized shielding gas mixture in accordance with an embodiment of the present invention. In step 400, the shielding gas mixture is entered into the power supply by entering the proportions of the different constituent shielding gasses. This could involve entering the proportions of one, two, three, four, five, six or more than six different constituent shielding gasses. The power supply then retrieves base waveform parameters, such as various level values or scaling factors, for the different constituent gasses that make up the shielding gas mixture (step 410). The base waveform parameters can at least partially define base welding waveforms that are associated with the respective constituent shielding gasses. The power supply then calculates shielding gas customized welding parameters from the proportions of the constituent gasses and the base waveform parameters associated with the constituent gasses (step 420). Using the shielding gas customized welding parameters, the controller in the power supply controls the output circuitry to generate the shielding gas customized welding waveform (step 430).

It is to be appreciated that the various metal deposition processes that utilize shielding gas mixtures can have different parameters that are adjusted according to the amounts of the constituent shielding gasses to be used. For example, in a GTAW welding process, an AC balance could be automatically adjusted based on the welding current level and the input shielding gas mixture. Also, the present invention is not limited to pulse welding and shielding gas customized pulse welding waveforms, but could also be used in constant voltage (CV) welding processes.

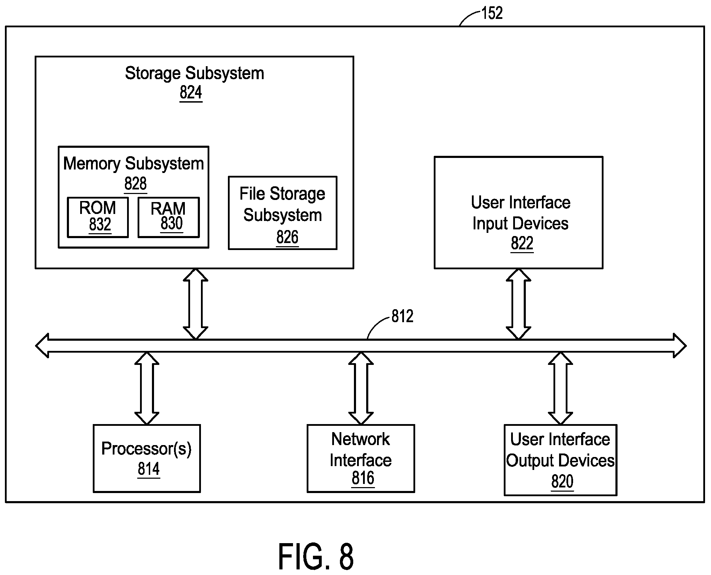

Figure 8 illustrates an embodiment of an example controller 152 of the welding power supply. The controller 152 includes at least one processor 814 which communicates with a number of peripheral devices via bus subsystem 812. These peripheral devices may include a storage subsystem 824, including, for example, a memory subsystem 828 and a file storage subsystem 826, user interface input devices 822, user interface output devices 820, and a network interface subsystem 816. The input and output devices allow user interaction with the controller 152. The input and output devices can be embodied in the user interface 105 discussed above. Network interface subsystem 816 provides an interface to outside networks and is coupled to corresponding interface devices in other computer systems.

User interface input devices 822 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 152 or onto a communication network.

User interface output devices 820 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 152 to the user or to another machine or computer system.

Storage subsystem 824 provides a non-transitory, computer-readable storage medium that stores programming and data constructs that provide the functionality of some or all of the modules described herein. These software modules are generally executed by processor 814 alone or in combination with other processors. Memory 828 used in the storage subsystem can include a number of memories including a main random access memory (RAM) 830 for storage of instructions and data during program execution and a read only memory (ROM) 832 in which fixed instructions are stored. A file storage subsystem 826 can provide persistent storage for program and data files, and may include a hard disk drive, a floppy disk drive along with associated removable media, a CD-ROM drive, an optical drive, or removable media cartridges. The modules implementing the functionality of certain embodiments may be stored by file storage subsystem 826 in the storage subsystem 824, or in other machines accessible by the processor(s) 814.

Bus subsystem 812 provides a mechanism for letting the various components and subsystems of the controller 152 communicate with each other as intended. Although bus subsystem 812 is shown schematically as a single bus, alternative embodiments of the bus subsystem may use multiple buses.

Many other configurations of the controller 152 are possible having more or fewer components than the controller depicted in FIG. 8.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

**REFERENCE NUMBERS**

| | | | |
|---|---|---|---|
| 100 | welding system | 156 | voltage sensor |
| 102 | welding power supply | 200 | waveform |
| 104 | wire feeder | 202 | ramp-up rate |
| 105 | interface | 204 | background current |
| 105a-c | user interfaces | 206 | peak current |
| 106 | gas supply | 208 | overshoot |
| 107a-f | shielding gas sources | 210 | tail-out |
| 108 | power cables | 212 | step-off current |
| 110 | control cable | 250 | lower trace |
| 112 | clamp | 260 | upper trace |
| 114 | power cable | 300 | waveform |
| 116 | pipe | 310 | peak pulse |
| 118 | regulators | 320 | time |
| 120 | housing | 330 | time |
| 122 | gear box | 340 | interval |
| 124 | spool assembly | 350 | boost pulse |
| 126 | user interface | 400 | step |
| 128 | hose | 410 | step |
| 130 | welding torch or gun | 420 | step |
| 132 | electric arc | 430 | step |
| 134 | welding electrode | 812 | bus subsystem |
| 136 | workpiece | 814 | processor |
| 138 | power source | 816 | interface subsystem |
| 140 | inverter | 820 | output device |
| 142 | input rectifier | 822 | input devices |
| 144 | transformer | 824 | storage subsystem |
| 146 | output rectifier | 826 | storage subsystem |
| 148 | contact tip | 828 | memory subsystem |
| 150 | spool | 830 | random access memory (RAM) |
| 152 | controller | 832 | read only memory (ROM) |
| 154 | shunt | | |

## Claims

1. A welding or additive manufacturing power supply (102), comprising:
a user interface configured to receive a user input shielding gas mixture comprising an amount of a first shielding gas and an amount of a second shielding gas, wherein the amount of the first shielding gas and the amount of the second shielding gas are separately adjustable;
output circuitry configured to generate a shielding gas customized welding waveform (200);
a memory (828) storing:
a first plurality of waveform parameters that are associated with the first shielding gas; and
a second plurality of waveform parameters that are associated with the second shielding gas;
**characterized by** a controller (152), operatively connected to control operations of the output circuitry, and configured to determine a third plurality of waveform parameters at least partially defining the shielding gas customized welding waveform (200),
wherein the controller determines the third plurality of waveform parameters from the first plurality of waveform parameters, the amount of the first shielding gas, the second plurality of waveform parameters, and the amount of the second shielding gas.

2. The welding or additive manufacturing power supply of claim 1, wherein the first plurality of waveform parameters at least partially define a first base pulse welding waveform that is associated with the first shielding gas, and the second plurality of waveform parameters at least partially define a second base pulse welding waveform that is associated with the second shielding gas; and/or wherein the third plurality of waveform parameters includes an average welding voltage, a current pulse peak, and a current pulse duration.

3. The welding or additive manufacturing power supply of claim 1 or 2, wherein the user interface is configured to allow adjustment of the amount of the first shielding gas from 0% to 100% of the shielding gas mixture, and is configured to allow adjustment of the amount of the second shielding gas from 0% to 100% of the shielding gas mixture.

4. The welding or additive manufacturing power supply of claim 3, wherein the third plurality of waveform parameters includes an average welding voltage that is calculated by the controller as a weighted average according to the amount of the first shielding gas and the amount of the second shielding gas.

5. The welding or additive manufacturing power supply of one of the claims 1 to 4, wherein:
the user input shielding gas mixture includes four separately adjustable proportions of the shielding gas mixture corresponding respectively to the first shielding gas, the second shielding gas, a third shielding gas, and a fourth shielding gas, the four separately adjustable proportions of the shielding gas mixture are separately adjustable between 0% and 100% of the shielding gas mixture, and
the controller determines the third plurality of waveform parameters based on the four separately adjustable proportions of the shielding gas mixture.

6. The welding or additive manufacturing power supply of one of the claims 1 to 5, wherein:
the user input shielding gas mixture includes five separately adjustable proportions of the shielding gas mixture corresponding respectively to the first shielding gas, the second shielding gas, a third shielding gas, a fourth shielding gas, and a fifth shielding gas,
the five separately adjustable proportions of the shielding gas mixture are separately adjustable between 0% and 100% of the shielding gas mixture, and
the controller determines the third plurality of waveform parameters based on the five separately adjustable proportions of the shielding gas mixture.

7. The welding or additive manufacturing power supply of one of the claims 1 to 6, wherein:
the user input shielding gas mixture includes six separately adjustable proportions of the shielding gas mixture corresponding respectively to the first shielding gas, the second shielding gas, a third shielding gas, a fourth shielding gas, a fifth shielding gas, and a sixth shielding gas,
the six separately adjustable proportions of the shielding gas mixture are separately adjustable between 0% and 100% of the shielding gas mixture, and
the controller determines the third plurality of waveform parameters based on the six separately adjustable proportions of the shielding gas mixture.

8. A welding or additive manufacturing power supply (102), in particular according to one of the claims 1 to 7, comprising:
a user interface (126) configured to receive a user input shielding gas mixture comprising a proportion of a first shielding gas of the shielding gas mixture, a proportion of a second shielding gas of the shielding gas mixture, and a proportion of a third shielding gas of the shielding gas mixture, wherein the proportion of the first shielding gas, the proportion of the second shielding gas, and the proportion of the third shielding gas are separately adjustable;
output circuitry configured to generate a shielding gas customized welding waveform;
a memory storing a first welding voltage level that is associated with the first shielding gas, a second welding voltage level that is associated with the second shielding gas, and a third welding voltage level that is associated with the third shielding gas;
**characterized by** a controller, operatively connected to control operations of the output circuitry, and configured to determine an average welding voltage level for the shielding gas customized welding waveform, wherein the controller calculates the average welding voltage level for the shielding gas customized welding waveform as a weighted average that includes the first welding voltage level at the proportion of the first shielding gas, the second welding voltage level at the proportion of the second shielding gas, and the third welding voltage level at the proportion of the third shielding gas.

9. The welding or additive manufacturing power supply of claim 8, wherein the controller further determines a plurality of waveform parameters of the shielding gas customized welding waveform based on the proportion of the first shielding gas, the proportion of the second shielding gas, and the proportion of the third shielding gas, wherein the plurality of waveform parameters includes both a pulse peak and pulse duration of a current pulse; and/or wherein the user interface is configured to allow adjustment of the proportion of the first shielding gas from 0% to 100% of the shielding gas mixture, and is configured to allow adjustment of the proportion of the second shielding gas from 0% to 100% of the shielding gas mixture, and is configured to allow adjustment of the proportion of the third shielding gas from 0% to 100% of the shielding gas mixture; and/or wherein the user interface is configured to output an alarm indication when a sum of the proportion of the first shielding gas, the proportion of the second shielding gas, and the proportion of the third shielding gas do not equal 100%.

10. The welding or additive manufacturing power supply of claim 8 or 9, wherein the proportion of the first shielding gas is an argon proportion of the shielding gas mixture, the proportion of the second shielding gas is a helium proportion of the shielding gas mixture, and the proportion of the third shielding gas is a carbon dioxide proportion of the shielding gas mixture; and/or wherein the proportion of the first shielding gas is hydrogen proportion of the shielding gas mixture, the proportion of the second shielding gas is a nitrogen proportion of the shielding gas mixture, and the proportion of the third shielding gas is an oxygen proportion of the shielding gas mixture.

11. The welding or additive manufacturing power supply of one of the claims 8 to 10, wherein:
the user interface is further configured to receive a proportion of a fourth shielding gas of the shielding gas mixture, wherein the proportion of the first shielding gas, the proportion of the second shielding gas, the proportion of the third shielding gas, and the proportion of the fourth shielding gas are separately adjustable,
the memory stores a fourth welding voltage level that is associated with the fourth shielding gas, and
the weighted average includes the fourth welding voltage level at the proportion of the fourth shielding gas.

12. The welding or additive manufacturing power supply of one of the claims 8 to 11, wherein:
the user interface is further configured to receive a proportion of a fourth shielding gas of the shielding gas mixture and a proportion of a fifth shielding gas of the shielding gas mixture, wherein the proportion of the first shielding gas, the proportion of the second shielding gas, the proportion of the third shielding gas, the proportion of the fourth shielding gas and the proportion of the fifth shielding gas are separately adjustable,
the memory stores a fourth welding voltage level that is associated with the fourth shielding gas, and a fifth welding voltage level that is associated with the fifth shielding gas, and
the weighted average includes the fourth welding voltage level at the proportion of the fourth shielding gas, and the fifth welding voltage level at the proportion of the fifth shielding gas.

13. The welding or additive manufacturing power supply of one of the claims 8 to 11, wherein:
the user interface is further configured to receive a proportion of a fourth shielding gas of the shielding gas mixture, a proportion of a fifth shielding gas of the shielding gas mixture, and a proportion of a sixth shielding gas of the shielding gas mixture, wherein the proportion of the first shielding gas, the proportion of the second shielding gas, the proportion of the third shielding gas, the proportion of the fourth shielding gas, the proportion of the fifth shielding gas, and the proportion of the sixth shielding gas are separately adjustable,
the memory stores a fourth welding voltage level that is associated with the fourth shielding gas, a fifth welding voltage level that is associated with the fifth shielding gas, and a sixth welding voltage level that is associated with the sixth shielding gas, and
the weighted average includes the fourth welding voltage level at the proportion of the fourth shielding gas, the fifth welding voltage level at the proportion of the fifth shielding gas, and the sixth welding voltage level at the proportion of the sixth shielding gas.

14. A welding or additive manufacturing power supply, in particular according to one of the claims 1 to 13, comprising:
a user interface configured to receive a user input shielding gas mixture comprising a proportion of a first shielding gas of the shielding gas mixture and a proportion of a second shielding gas of the shielding gas mixture, wherein the proportion of the first shielding gas and the proportion of the second shielding gas are separately adjustable;
output circuitry configured to generate a shielding gas customized welding waveform;
a memory storing a first average welding voltage level that is associated with the first shielding gas, and a second average welding voltage level that is associated with the second shielding gas; and
a controller, operatively connected to control operations of the output circuitry, and configured to determine a third average welding voltage level for the shielding gas customized welding waveform, wherein the controller calculates the third average welding voltage level for the shielding gas customized welding waveform using the proportion of the first shielding gas, the first average welding voltage level, the proportion of the second shielding gas, and the second average welding voltage level.

15. The welding or additive manufacturing power supply of claim 14, wherein the third average welding voltage level for the shielding gas customized welding waveform is a weighted average that is weighted according to the proportion of the first shielding gas and the proportion of the second shielding gas; and/or wherein the controller further determines a plurality of waveform parameters of the shielding gas customized welding waveform based on the proportion of the first shielding gas and the proportion of the second shielding gas, wherein the plurality of waveform parameters includes both a pulse peak and pulse duration of a current pulse; and/or wherein the user interface is configured to allow adjustment of the proportion of the first shielding gas from 0% to 100% of the shielding gas mixture, and is configured to allow adjustment of the proportion of the second shielding gas from 0% to 100% of the shielding gas mixture; and/or wherein:
the user input shielding gas mixture includes four separately adjustable proportions of the shielding gas mixture corresponding respectively to the first shielding gas, the second shielding gas, a third shielding gas, and a fourth shielding gas, the four separately adjustable proportions of the shielding gas mixture are separately adjustable between 0% and 100% of the shielding gas mixture, and
the third average welding voltage level for the shielding gas customized welding waveform is a weighted average that is weighted according to the four separately adjustable proportions of the shielding gas mixture; and/or wherein:
the user input shielding gas mixture includes five separately adjustable proportions of the shielding gas mixture corresponding respectively to the first shielding gas, the second shielding gas, a third shielding gas, a fourth shielding gas, and a fifth shielding gas,
the five separately adjustable proportions of the shielding gas mixture are separately adjustable between 0% and 100% of the shielding gas mixture, and
the third average welding voltage level for the shielding gas customized welding waveform is a weighted average that is weighted according to the five separately adjustable proportions of the shielding gas mixture; and/or wherein:
the user input shielding gas mixture includes six separately adjustable proportions of the shielding gas mixture corresponding respectively to the first shielding gas, the second shielding gas, a third shielding gas, a fourth shielding gas, a fifth shielding gas, and a sixth shielding gas,
the six separately adjustable proportions of the shielding gas mixture are separately adjustable between 0% and 100% of the shielding gas mixture, and
the third average welding voltage level for the shielding gas customized welding waveform is a weighted average that is weighted according to the six separately adjustable proportions of the shielding gas mixture.
